# EUROPEAN PATENT SPECIFICATION

(11) **EP 1 880 048 B1**
(45) Date of publication and mention of the grant of the patent: **19.05.2010**
(21) Application number: 06708402.0
(22) Date of filing: 21.02.2006
(51) Int. Cl.: D02G 3/12, D02G 3/44, B21C 37/04, B60N 2/56

(54) **BUNDLE DRAWN METAL FIBER WITH THREE LAYERS**
BÜNDELGEZOGENE METALLFASER MIT DREI SCHICHTEN
FIBRE METALLIQUE ETIREE EN FAISCEAU AVEC TROIS COUCHES

(30) Priority: 10.05.2005 EP 05103874
(43) Date of publication of application: 23.01.2008
(73) Proprietor: NV Bekaert SA, 8550 Zwevegem (BE)
(72) Inventor: HOLVOET, Jan, B-8580 Avelgem (BE); VERSTRAETEN, Steve, B-2018 Antwerpen (BE)
(86) International application number: PCT/EP2006/060121
(87) International publication number: WO 2006/120045

(56) References cited:
- EP-A- 1 070 558
- EP-A- 1 176 610
- US-A1- 2003 150 850
- PATENT ABSTRACTS OF JAPAN vol. 017, no. 592 (M-1502), 28 October 1993 (1993-10-28) & JP 05 177243 A (BRIDGESTONE BEKAERT STEEL CODE KK), 20 July 1993 (1993-07-20) cited in the application

## Description

### Field of the invention.

The present invention relates to metal fibers, more in particular to bundle drawn metal fibers for use in heatable textile products such as seat heating, e.g. car seat heating.

### Background of the invention.

At present, bundle drawn metal fibers out of stainless steel, are well known in the art. The use of bundle drawn metal fibers for seat heating such as car seat heating is known from e.g. WO03/095724 and WO03/095725.

These documents disclose methods to tuning of the conductivity of the yarns comprising such bundle drawn metal fibers. The ability to adjust or select a given conductivity is an important issue for the integration of metal fibers and metal fiber yarns as resistance heating element in a heatable textile product. '

The fact that Cu is present at the outer surface however is however a disadvantage. Cu has the tendency to oxidize easily when used as a part of the heating textile, having Cu which may come into contact with e.g. sweat.

Bundle drawn metal fibers comprising at least three concentric layers of metal in a radial cross section, in which the Cu is not present at the outer surface is described in JP5-177243 example 2. A combination of 3 concentric layers was provided, being of a second layer of Cu was concentrically provided around a high carbon steel metal core, which combination on its turn was provided with a surface layer of acid resistant stainless steel being SUS 304 stainless steel. The Cu layer was provided by means of electrodepositing of copper.

The metal fibers according to JP5-177243 have a surface layer, which represents at least 36% of the surface of a radial cross section of the metal fiber.

In use, such fibers however have the disadvantages that the outer layer tends to release from the underlying layer in case the fiber is subjected to repetitive bending. The so-called "flex life" is limited and not adapted to the use of the metal fibers in heatable textiles. Such failures also occur when copper wire, copper strands or carbon filaments are used.

Further, a fiber equivalent diameter reduction to lower diameters of such multi-layered metal fibers, this is an equivalent diameter of about 50µm or less, seems to cause frequent ruptures of the fibers in the composite wire used during bundle drawing operations, which ruptures may disturb further diameter reduction.

### Summary of the invention.

It is an object of the present invention to provide bundle drawn metal fibers comprising at least three concentric layers of metal in a radial cross section which overcome the drawbacks of the bundle drawn metal fibers as state of the art. It is further object of the present invention to provide bundle drawn metal fibers having improved mechanical resistance to consecutive bending load. It is further an object of the present invention to provide bundle drawn metal fibers being more suitable for being provided with finer equivalent diameters.

According to the invention, the above-mentioned effects are obtainable by providing a bundle drawn metal fiber, having the specific features as set out in claim 1. Specific features of preferred embodiments are set out in the dependent claims.

Surprisingly it was found that in case the bundle drawn metal fibers have an outer layer whose thickness is kept less than 30% of the equivalent diameter of the bundle drawn metal fiber, more preferred less than 15% or even less than 10% than the equivalent diameter, a higher "flexlife" was obtained for the heatable textiles using yarns comprising such metal fibers as resistance heating element. This average thickness may even be less than 9% or even less than 8% of the equivalent fiber diameter.

The best results are obtained when the sum of all thickness of the intermediate layers is also less than or equal to 20% of the equivalent diameter of the bundle drawn metal fiber.

According to the invention bundle drawn metal fibers are preferably made using the method comprising the steps of
- providing a core wire; this core wire will provide the inner • concentric layer or 'core layer' of the bundle drawn metal fiber.
- providing at least one intermediate layer to the core wire, by cladding a metal foil on this core wire. The sum of the thickness of the intermediate layers T1, being the sum of foil thickness' and the radius of the core wire R1 are given a ratio T1/R1 equal to the required ratio t1/r1 of half of the equivalent diameter of the core (r1) and sum of intermediate layer thickness' (t1) of the intended bundle drawn metal fiber to be obtained.
- providing a coated core wire by providing a surface layer around this core wire and intermediate layer or layers, by cladding a metal foil on this core wire and intermediate layer or layers. The surface layer, and thus the metal foil, is provided from a corrosion resistant metal and has preferably a low number of inclusions in the alloy. The thickness of the surface layer T2, and as a consequence the foil thickness and the radius of the core wire R1 are given a ratio T2/R1 equal to the required ratio t2/r1 of half of the equivalent diameter of the core r1 and surface layer thickness t2 of the intended bundle drawn metal fiber to be obtained. Possibly an additional step of diameter reduction by a wire drawing operation, applied on the coated core wire, prior to covering the coated core wire with a lower acid resistant material in the next step may be applied. The diameter of the coated core wire, possibly after a wire diameter reduction step executed on this coated core wire, is hereafter to be understood as the initial coated core wire.
- covering the outer surface of the coated wire with a matrix, preferably a metal matrix, being a lower acid resistant material than the metal of the surface layer. Preferably this lower acid resistant material is copper or iron;
- bundling a number of coated wires, covered with a lower acid resistant material to a bundle and providing a cover sheet of lower acid resistant material around this bundle, in order to provide a composite wire with an initial diameter. This sheet is preferably provided out of iron or low carbon steel;
- drawing, and if necessary intermediary annealing, this composite wire to a final diameter by a wire drawing operation to a final composite diameter;
- removing the sheet and the matrix from the composite wire by dissolving the sheet and the matrix in appropriate acid such as nitric acid or sulfuric acid, possibly assisted by using electrochemical processes, in order to provide a bundle of invention metal fibers.

Possibly, an additional step of twisting the composite wire on final diameter prior to removal of the sheet and matrix may be applied. This results in a bundle of bundle drawn metal fibers being twisted to each other. A single yarn comprising a number of bundle drawn metal fiber filaments may so be obtained.

Possibly, an additional step of twining at least two composite wires on final diameter, either twisted composite wires or not, prior to removal of the sheet and matrix may be applied. This results in a plied yarn comprising at least two single yarns of bundle drawn metal fibers may be provided.

Possibly, the composite wire on final diameter is provided with a crimp by crimping the composite wire between gear wheels, prior to removal of the matrix material. This step provides the metal fibers obtained after removal of the matrix, having an undulation or crimp meanwhile avoiding damage on the fiber surface.

Possibly, after the removal of the matrix material, a bundle of bundle drawn metal fibers may be stretch broken to provide staple fibers, which on their turn may be used to provide a spun yarn comprising metal fibers as subject of the invention in the form of staple fibers. It is understood that in such spun yarns, additional non metal fibers may be blended with the metal fibers as subject of the invention. Preferably, undulated metal fibers are used.

It is understood that each of the coated wires as present in the composite wire represents one bundle drawn metal fiber of the bundle of metal fibers. The equivalent diameter of the metal fibers has the same ratio to the initial coated wire diameter, as the ratio between initial composite diameter and final composite diameter.

The term "equivalent diameter" of a fiber is to be understood as the diameter of an imaginary circle having a surface area equal to the surface area of the radial cross section of the fiber. Because of the bundle drawing operation, the cross section of a fiber has usually a pentagonal or hexagonal shape, and the circumference of the fiber cross section is usually serrated.

It was found that the fact that the consecutive layers of metal being provided by cladding, the contact between the surfaces of the consecutive layers which on its turn improved mechanical resistance to consecutive bending load is improved, and enables to provide bundle drawn metal fibers being provided with finer equivalent diameters. The equivalent diameter of a bundle drawn metal fiber may be less than 100µm, even less than 50µm such as less than 36µm, e.g. less than 30µm or even less than 25µm or even less than 20µm.

The core wire is provided with intermediate metal layers by cladding one or more foils around the core metal wire present at the center of the fiber. The fiber thus obtained comprises more than one metal layer, arranged according to concentric layers around the axis of the metal fiber. The metal present at the core layer, this is at the center of the radial cross sections, may preferably be selected from the group consisting of stainless steels, high carbon steel alloys and low carbon steel alloys. Most preferred are stainless steels, such as Fe-Ni-Cr alloys or Fe-Cr-Al alloys.

Most preferred is that the metal present at the center of the radial cross section and the metal from the surface layer are stainless steels, such as Fe-Ni-Cr alloy stainless steels, such as AISI 316 stainless steel alloys, e.g. AISI 316tri. Most preferred, in case stainless steels being the metal present at the center of the radial cross sections and the surface layer, a copper layer is present as intermediate layer.

The sum of thickness of the intermediate layers may vary over a large range. This sum however is preferably less than 20% of the equivalent diameter of the metal fiber.

The metal to provide the intermediate layers is preferably selected from the group consisting of copper or copper alloys, aluminum or aluminum alloys, silver and silver alloys and gold and gold alloys. Copper or copper alloy is preferred.

In order to obtain such thickness of intermediate layers, the thickness T1 of the metal foils establishing the intermediate layers and to be cladded to the core layer, is chosen less than 20% of the sum of core wire radius R1, the foil thickness T1 of the foils establishing the intermediate layers and the foil thickness T2 of the foil establishing the surface layer.

The surface layer is preferably provided to the core by means of cladding of a metal foil to the core layer and intermediate layers, which metal foil has an appropriate thickness, which acid resistance being better or equal than the metal form the underlying layers. In order to be able to bundle draw the fibers to a smaller fiber diameter, the purity of the alloy of the surface layer is to be chosen very carefully. The less inclusions the alloy has, the more the bundle drawn metal fiber may be drawn to smaller equivalent diameters.

On the other hand, the surface layer usually has an average thickness of more than 1 % of the equivalent fiber diameter, more preferred more than 1.5% or even more than 2% of the equivalent fiber diameter.

The bundle drawn metal fibers may be provided having an outer surface layer which represents 30% or less or the area of a radial cross-section of said metal fiber. The average thickness of this surface layer may even be less than 15% or even less than 10% of the equivalent diameter of the metal fiber. This average thickness may even be less than 9% or even less than 8% of the equivalent fiber diameter.

In order to obtain such thickness of surface layer, the thickness T2 of the metal foil establishing the surface layer and cladded to the intermediate layer, is chosen less than 30% or even less than 15% or even less than 10%, or even less than 9% or less than 8% of the sum of core wire radius R1, the foil thickness T1 of the foil establishing the intermediate layer and the foil thickness T2 of the foil establishing the surface layer.

The alloy of the surface layer of the metal fiber is to meet several requirements, such as:
- acid resistant in order to enable the sheet and matrix material with few or no loss of surface layer material;
- well deformable during bundle drawing. For this a high degree of purity of the alloy is preferred in order to be able to provide less thick surface layers of finer metal fibers;
- able to be clad in order to further improve the workability and drawability.

In case of particular use of the metal fibers, such as the use as heating element of heatable textile products, an additional property of resistance to galvanic corrosion or resistance to sweat is required.

This surface layer of the bundle drawn metal fiber is preferably chosen from the group consisting of stainless steels, nickel or nickel alloys, aluminum or aluminum alloys or titanium or titanium alloys. More preferred, stainless steels are used such as Fe-Ni-Cr alloys or Fe-Cr-Al alloys. As an example AISI 316Ti of an ESR refined type is used, or as alternative, a stainless steel alloy of the Inconel-type such as Inconel 601 comprising approximately 23% Cr, approximately 60% Ni, approximately 14% Fe and approximately1.4% Al may be used.

It was found that use of a metal as surface layer having minimum amounts of inclusions, preferably having substantially no inclusion, further enables to make bundle drawn metal fibers which surface layer is less thick as known in prior art. Apparently, the purity of this surface layer further enables a further reduction of the thickness of the surface layer during the drawing operations applied on the composite wire, and/or enables the use of initially less thick surface layers clad to the core wire with intermediate layer. The few or non presence of impurities in the surface layer, seems to avoid to a too large extend the rupture of or apertures in the surface layer, which could cause corrosion or dissolving of the core of the metal fiber. It also further diminish the number of interruptions of the metal fibers in the bundle of metal fibers immediately after removal of the matrix and sheet, even at smaller equivalent diameters.

According to the invention, a bundle drawn metal fiber comprises at least three concentric layers (a core layer, one intermediate layer and a surface layer), concentrically arranged around the metal fiber axis, which layers are provided on to the other preferably by cladding.

The advantages of bundle drawn metal fibers are multiple. First of all, the resistance to repetitive bending is significantly improved as compared to the presently known bundle drawn metal fibers, who comprise a copper layer, as wall as compared to resistance heating elements comprising copper wire or carbon filament.

Especially in case the intermediate layer or layers are provided by cladding, as well as the outer surface layer, this seems to have a positive effect on the so-called flex-life of metal fibers when used as heating elements in e.g. heatable textiles. The resistance against consecutive bending forces (the flex-life) is one of the most important features for metal fibers next to the electrical conductivity, when used as resistance heating element of a heatable textile product, such as car seat heatings.

The surface layer may be of reduced thickness, as compared to present state of the art of bundle drawn metal fibers. Too thick a surface layer tends to burst under repetitive bending loads. Thinner surface layers seem to resist longer repetitive bending forces.

Also the mechanical bond between the consecutive layer seems to be improved in case the layers being provided by cladding. The tendency to release one from the other is decreased to a large extent, which results in better drawability of the fibers during production, and to less risk on loosening of layers when the fibers are subjected to repetitive bending actions.

Further, as the necessary higher electrically conductive metal is shifted more to the outer surface of the metal fiber, more space is available for a mechanically more resistant metal in the center of the metal fibers, which on its turn provide more resistance to bending loads as well.

For a given equivalent fiber diameter, a larger volume of higher electrically conductive metal may be provided to the bundle drawn metal fibers intermediate layers, as the outer surface layer can be limited in thickness to a larger extend as presently known. In such a way, the metal fibers for this given equivalent diameter become more electrically conductive. Alternatively, for a given required electrical conductivity of a bundle drawn metal fiber, a metal fiber with a smaller equivalent diameter, and thus a lower weight and volume may be used. The dimension of the core layer and the intermediate layer may be increased as compared to the outer layer.

Further, as the necessary higher electrically conductive metal is shifted more to the outer surface of the metal fiber, more space is available for a mechanically more resistant metal in the center of the metal fibers, which on its turn provide more resistance to bending loads as well.

A positive effect was also noticed with regard to the shielding effect of the metal fibers when used for EMI shielding element sin EMI shielding applications.

The fact that the higher electrically conductive metal may be present more close to the outer surface of the fibers, also has a positive effect on the EMI-shielding properties of the metal fiber, especially for high frequency shielding.

When higher frequencies are to be shielded of, this shielding is mostly obtained by so-called skin effects, which occurs at the outer zone of the metal fiber cross section. The more high electrically conductive material is present in this outer zone, especially close to the outer surface of the metal fiber, the better high frequencies will be shielded of. Because one may provide metal fibers having a thinner surface layer above the higher electrically conductive metal, this higher electrically conductive metal is present more close to the outer surface of the metal fiber and the better the shielding effect will be, even if this layer of higher electrically conductive metal is only a thin layer. The larger amount of metal under the higher electrically conductive metal, in case a core with two or more concentric layers are used, may serve as to provide mechanically more stronger metal fibers having better shielding effect for higher ranges of frequencies.

### Brief description of the drawings.

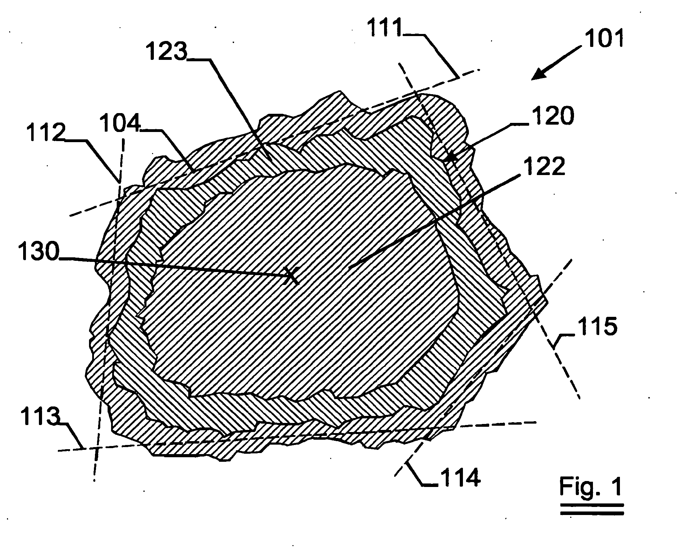

The invention will now be described into more detail with reference to the accompanying drawings wherein FIGURE 1 shows a schematically view of a radial cross section of a bundle drawn metal fiber.

### Description of the preferred embodiments of the invention.

An embodiment of the present invention is schematically shown in FIGURE 1. FIGURE 1 shows a schematically view of a radial cross section of a bundle drawn metal fiber 101.

The bundle drawn metal fiber 101 has a substantially pentagonal shape, of which the sides are schematically indicated by means of dotted lines 111, 112, 113, 114 and 115. The metal fiber 101 comprises a surface layer 104 being provided out of a stainless steel alloy, AISI 316Ti. The metal fiber further comprises a core 120 and being enveloped by said surface layer 104. The core 120 comprises two concentric layers 122 and 123 of metal, concentrically around the axis 130 of the metal fiber. The intermediate layer 123 contacts the surface layer 104 which layer consists of copper, so has a higher electrically conductivity as compared to the metal of the surface layer 104. The core layer 122 of metal being present at the center of the metal fiber is provided using either stainless steel AISI 316.

The equivalent diameter of the metal fiber 101 is 35µm. The average thickness of the surface layer 104 is 2.5µm. The surface layer 104 represents 26.5% of the total surface of a radial cross section. The average thickness is less than 10% of the equivalent diameter of the fiber. More in particular, the average thickness of the surface layer is 7.5% of the equivalent diameter of the fiber.

The surface of the intermediate layer 123 represents 30.5% of the total surface area of a radial cross section of the metal fiber. The average thickness of the copper intermediate layer 123 is 3.5µm or 10% of the equivalent fiber diameter.

This average thickness of the intermediate layer 123 is calculated by calculating the equivalent diameter of the metal fiber without the surface layer and the equivalent diameter of the metal fiber without surface layer and intermediate layer 123.

The average thickness is half of the equivalent diameter of the metal fiber without the surface layer minus the equivalent diameter of the metal fiber without surface layer and intermediate layer 123.

Alternatively, AISI 316Ti or a high carbon steel or a low carbon steel was used to provide the core layer 122.

As another alternative, a silver or aluminum metal was used to provide intermediate layer 123.

During production, a further reduction of the diameter of the composite diameter generated bundle drawn metal fibers having an equivalent diameter of 22.5µm

The embodiments are obtained in a substantially similar way.

A method to provide the bundle drawn fibers as in FIGURE 1 comprises the steps of
- providing a core wire. In case of a first embodiment of FIGURE 1, a copper core wire is provided, in case of a second embodiment of FIGURE 1, a core wire comprising a layer of stainless steel AISI 316 ESR quality, being provided by cladding with a layer of copper, is applied. The core wires have a diameter of 8mm ;
- providing a coated core wire with an initial coated wire diameter, by providing a surface layer around this core wire, preferably by cladding a metal foil on this core wire. The surface layer, is provided from stainless steel AISI 316Ti (ESR quality). The thickness of the surface layer is 0.65mm. The coated core wire has a diameter of 9.2mm.
- the coated core wire is reduced in diameter with a factor 10 by a wire drawing operation.
- covering the outer surface of the coated wire with a copper matrix, being a lower acid resistant material than the metal of the surface layer.;
- bundling 40 coated wires, covered with a lower acid resistant material to a bundle and providing an iron sheet, in order to provide a composite wire with an initial diameter.
- drawing and if necessary intermediately annealing this composite wire to a final diameter of 0.6mm by a wire drawing operation.
- removing the sheet and the matrix from the composite wire by dissolving the sheet and the matrix in nitric acid in order to provide a bundle of metal fibers as subject of the invention.

Apparently the use of a clad stainless steel layer and a clad copper intermediate layer seems to enable the production of bundle drawn metal fibers in an economical and reproducible way.

An alternative product was made using a substantially similar method. 275 coated wires were bundled and provided with a an iron sheet. After having drawn the composite wire in order to have 275 metal fibers with equivalent diameter of 35µm, the composite wire was given a an additional step of twisting the composite wire prior to removal of the sheet and matrix. After leaching the bundle of metal fibers, a single yarn comprising 275 bundle drawn metal fiber filaments of 35µm equivalent diameter, being twisted to each other was obtained. Another alternative product was made using a substantially similar method. 275 coated wires were bundled and provided with an iron sheet. After having drawn the composite wire in order to have 275 metal fibers with equivalent diameter of 35µm, the composite wire was given a an additional step of twisting the composite wire prior to removal of the sheet and matrix. A left hand twisting direction was used. After this twisting step, two twisted composite wires were twined to each other in opposite, thus right direction. After leaching the bundle of metal fibers, a plied yarn comprising 2 single yarns of each 275 bundle drawn metal fiber filaments being twisted to each other was obtained.

The filament yarns were used as resistance heating element in a car seat heating.

## Claims

1. A bundle drawn metal fiber having a radial cross section comprising at least three concentric metal layers being a core layer, a surface layer and at least one intermediate layer, said at least one intermediate layer enveloping said core layer, said surface layer enveloping said at least intermediate layer, said surface layer providing the outer surface of said bundle drawn metal fiber, **characterized in that** said surface layer has an average thickness of less than 30% of the equivalent diameter of said metal fiber.

2. A bundle drawn metal fiber in claim 1, wherein said surface layer has an average thickness of less than 15% of the equivalent diameter of said metal fiber.

3. A bundle drawn metal fiber in any one of the claims 1 to 2, wherein said surface layer has an average thickness of less than 10% of the equivalent diameter of said metal fiber.

4. A bundle drawn metal fiber in any one of the claims 1 to 3, wherein said bundle drawn metal fibers comprises more than one concentrically arranged intermediate layer.

5. A bundle drawn metal fiber as in any one of the claims 1 to 4,
wherein the sum of the average thickness of all of said intermediate layers is less than 20% of the equivalent diameter of said metal fiber.

6. A bundle drawn metal fiber as in any one of the claims 1 to 5,
wherein the metal of said core layer is chosen out of the group consisting of stainless steel, high carbon steel or low carbon steel.

7. A bundle drawn metal fiber as in any one of the claims 1 to 6,
wherein said surface layer being provided out of a metal from the group consisting of stainless steel, nickel, nickel alloy, aluminum, aluminum alloy, titanium and titanium alloy.

8. A bundle drawn metal fiber as in any one of the claims 1 to 7,
wherein both the metal of said core layer and the metal of said surface layer are stainless steel.

9. A bundle drawn metal fiber as in any one of the claims 1 to 8,
wherein said metal of said at least one intermediate layer is a metal from the group consisting of copper, copper alloy, aluminum, aluminum alloy, silver, silver alloy, gold and gold alloy.

10. A bundle drawn metal fiber as in any one of the claims 1 to 9,
wherein the metal fiber has an equivalent diameter of less than 100µm.

11. A bundle drawn metal fiber as in any one of the claims 1 to 10,
wherein the metal fiber has an equivalent diameter of less than 50µm.

12. A bundle of bundle drawn metal fibers as in any one of the claims 1 to 11.

13. A yarn comprising bundle drawn metal fibers as in any one of the claims 1 to 11.

14. A yarn as in claim 13, wherein said metal fibers are present as filament fibers.

15. A yarn as in claim 13, wherein said metal fibers are present as staple fibers.

16. The use of bundle drawn metal fibers as in one of the claims 1 to 11 as EMI shielding elements in EMI shielding applications.

17. The use of bundle drawn metal fibers as in one of the claims 1 to 11 as resistance heating elements in heatable textile applications.

18. The use of bundle drawn metal fibers as in claim 17, wherein said heatable textile application is car seat heating.

19. The use of a yarn as in one of the claims 13 to 15 as resistance heating elements in heatable textile applications.

20. The use of a yarn as in claim 19, wherein said heatable textile application is car seat heating.

## Patentansprüche

1. Bündelgezogene Metallfaser, die einen radialen Querschnitt hat, welcher mindestens drei konzentrische Metallschichten aufweist, welche eine Kernschicht, eine Oberflächenschicht und mindestens eine Zwischenschicht sind, wobei die mindestens eine Zwischenschicht die Kernschicht umschließt, wobei die Oberflächenschicht die mindestens eine Zwischenschicht umschließt, wobei die Oberflächenschicht die äußere Oberfläche der bündelgezogenen Metallfaser bereitstellt, **dadurch gekennzeichnet, dass** die Oberflächenschicht eine durchschnittliche Dicke von weniger als 30 % des äquivalenten Durchmessers der Metallfaser hat.

2. Bündelgezogene Metallfaser nach Anspruch 1, wobei die Oberflächenschicht eine durchschnittliche Dicke von weniger als 15 % des äquivalenten Durchmessers der Metallfaser hat.

3. Bündelgezogene Metallfaser nach einem der Ansprüche 1 bis 2, wobei die Oberflächenschicht eine durchschnittliche Dicke von weniger als 10 % des äquivalenten Durchmessers der Metallfaser hat.

4. Bündelgezogene Metallfaser nach einem der Ansprüche 1 bis 3, wobei die bündelgezogenen Metallfasern mehr als eine konzentrisch angeordnete Zwischenschicht haben.

5. Bündelgezogene Metallfaser nach einem der Ansprüche 1 bis 4, wobei die Summe der durchschnittlichen Dicken aller Zwischenschichten kleiner als 20 % des äquivalenten Durchmessers der Metallfaser ist.

6. Bündelgezogene Metallfaser nach einem der Ansprüche 1 bis 5, wobei das Metall der Kernschicht aus der Gruppe gewählt ist, die aus Edelstahl, hochkohlenstoffhaltigem Stahl oder kohlenstoffarmem Stahl besteht.

7. Bündelgezogene Metallfaser nach einem der Ansprüche 1 bis 6, wobei die Oberflächenschicht aus einem Metall aus der Gruppe bereitgestellt ist, die aus Edelstahl, Nickel, Nickellegierung, Aluminium, Aluminiumlegierung, Titan und Titanlegierung besteht.

8. Bündelgezogene Metallfaser nach einem der Ansprüche 1 bis 7, wobei das Metall der Kernschicht und das Metall der Oberflächenschicht Edelstahl ist.

9. Bündelgezogene Metallfaser nach einem der Ansprüche 1 bis 8, wobei das Metall der mindestens einen Zwischenschicht ein Metall aus der Gruppe ist, die aus Kupfer, Kupferlegierung, Aluminium, Aluminiumlegierung, Silber, Silberlegierung, Gold und Goldlegierung besteht.

10. Bündelgezogene Metallfaser nach einem der Ansprüche 1 bis 9, wobei die Metallfaser einen äquivalenten Durchmesser von weniger als 100 µm hat.

11. Bündelgezogene Metallfaser nach einem der Ansprüche 1 bis 10, wobei die Metallfaser einen äquivalenten Durchmesser von weniger als 50 µm hat.

12. Bündel von bündelgezogenen Metallfasern nach einem der Ansprüche 1 bis 11.

13. Garn, das bündelgezogene Metallfasern nach einem der Ansprüche 1 bis 11 umfasst.

14. Garn nach Anspruch 13, wobei die Metallfasern als Filamentfasern vorhanden sind.

15. Garn nach Anspruch 13, wobei die Metallfasern als Stapelfasern vorhanden sind.

16. Verwendung von bündelgezogenen Metallfasern nach einem der Ansprüche 1 bis 11 als EMI-Abschirmelemente in EMI-Abschirmanwendungen.

17. Verwendung von bündelgezogenen Metallfasern nach einem der Ansprüche 1 bis 11 als Widerstandsheizelemente in Anwendungen mit heizbaren Textilien.

18. Verwendung von bündelgezogenen Metallfasern nach Anspruch 17, wobei die Anwendung mit heizbaren Textilien die Autositzheizung ist.

19. Verwendung eines Garns nach einem der Ansprüche 13 bis 15 als Widerstandsheizelemente in Anwendungen mit heizbaren Textilanwendungen.

20. Verwendung eines Garns nach Anspruch 19, wobei die Anwendung mit heizbaren Textilien die Autositzheizung ist.

## Revendications

1. Fibre métallique étirée en faisceau ayant une section radiale comprenant au moins trois couches métalliques concentriques étant une couche de cour, une couche de surface et au moins une couche intermédiaire, ladite au moins une couche intermédiaire enveloppant ladite couche de coeur, ladite couche de surface enveloppant ladite au moins une couche intermédiaire, ladite couche de surface fournissant la surface externe de ladite fibre métallique étirée en faisceau, **caractérisée en ce que** ladite couche de surface a une épaisseur moyenne inférieure à 30 % du diamètre équivalent de ladite fibre métallique.

2. Fibre métallique étirée en faisceau selon la revendication 1, dans laquelle ladite couche de surface a une épaisseur moyenne inférieure à 15 % du diamètre équivalent de ladite fibre métallique.

3. Fibre métallique étirée en faisceau selon l'une quelconque des revendications 1 et 2, dans laquelle ladite couche de surface a une épaisseur moyenne inférieure à 10 % du diamètre équivalent de ladite fibre métallique.

4. Fibre métallique étirée en faisceau selon l'une quelconque des revendications 1 à 3, ladite fibre métallique étirée en faisceau comprenant plusieurs couches intermédiaires disposées de façon concentrique.

5. Fibre métallique étirée en faisceau selon l'une quelconque des revendications 1 à 4, dans laquelle la somme de l'épaisseur moyenne de toutes lesdites couches intermédiaires est inférieure à 20 % du diamètre équivalent de ladite fibre métallique.

6. Fibre métallique étirée en faisceau selon l'une quelconque des revendications 1 à 5, dans laquelle le métal de ladite couche de coeur est choisi dans le groupe constitué par l'acier inoxydable, l'acier dur et l'acier doux.

7. Fibre métallique étirée en faisceau selon l'une quelconque des revendications 1 à 6, dans laquelle ladite couche de surface est fournie dans un métal du groupe constitué par l'acier inoxydable, le nickel, les alliages de nickel, l'aluminium, les alliages d'aluminium, le titane et les alliages de titane.

8. Fibre métallique étirée en faisceau selon l'une quelconque des revendications 1 à 7, dans laquelle le métal de ladite couche de coeur et le métal de ladite couche de surface sont tous deux de l'acier inoxydable.

9. Fibre métallique étirée en faisceau selon l'une quelconque des revendications 1 à 8, dans laquelle ledit métal de ladite au moins une couche intermédiaire est un métal du groupe constitué par le cuivre, les alliages de cuivre, l'aluminium, les alliages d'aluminium, l'argent, les alliages d'argent, l'or et les alliages d'or.

10. Fibre métallique étirée en faisceau selon l'une quelconque des revendications 1 à 9, la fibre métallique ayant un diamètre équivalent inférieur à 100 µm.

11. Fibre métallique étirée en faisceau selon l'une quelconque des revendications 1 à 10, la fibre métallique ayant un diamètre équivalent inférieur à 50 µm.

12. Faisceau de fibres métalliques étirées en faisceau selon l'une quelconque des revendications 1 à 11.

13. Fil comprenant des fibres métalliques étirées en faisceau selon l'une quelconque des revendications 1 à 11.

14. Fil selon la revendication 13, dans lequel lesdites fibres métalliques sont présentes sous forme de fibres continues.

15. Fil selon la revendication 13, dans lequel lesdites fibres métalliques sont présentes sous forme de fibres discontinues.

16. Utilisation de fibres métalliques étirées en faisceau selon l'une des revendications 1 à 11 comme éléments de blindage EMI dans des applications de blindage EMI.

17. Utilisation de fibres métalliques étirées en faisceau selon l'une des revendications 1 à 11 comme éléments de chauffage par résistance dans des applications de textile chauffant.

18. Utilisation de fibres métalliques étirées en faisceau selon la revendication 17, dans laquelle ladite application de textile chauffant est le chauffage de sièges de voitures.

19. Utilisation d'un fil selon l'une des revendications 13 à 15 comme élément de chauffage par résistance dans des applications de textile chauffant.

20. Utilisation d'un fil selon la revendication 19, dans laquelle ladite application de textile chauffant est le chauffage de sièges de voitures.
